# EUROPEAN PATENT SPECIFICATION

(11) **EP 2 829 589 B1**
(45) Date of publication and mention of the grant of the patent: **22.02.2017**
(21) Application number: 14182085.2
(22) Date of filing: 25.05.2012
(51) Int. Cl.: C10L 5/44, C10B 53/02, C10L 5/36, C10B 49/10, C10B 57/10, F01K 13/00

(54) **Method for producing charcoal**
Verfahren zur Herstellung von Holzkohle
Procédé de production de charbon de bois

(30) Priority: 27.05.2011 FI 20110180
(43) Date of publication of application: 28.01.2015
(62) Divisional of application: 12731510.9
(73) Proprietor: Outotec (Finland) Oy, 02230 Espoo (FI)
(72) Inventor: Metsärinta, Maija-Leena, 28450 Vanha-Ulvila (FI)
(74) Representative: Kolster Oy Ab

(56) References cited:
- EP-A1- 2 025 738
- CA-A1- 1 054 088
- DE-A1- 2 523 238
- US-A1- 2010 251 616

## Description

### FIELD OF THE INVENTION

The invention relates to a method for continuous production of charcoal suitable for use in the metallurgical industry by a method where the purpose is to obtain charcoal having sufficient strength, low ash content as well as low phosphorus and sulphur content.

### BACKGROUND OF THE INVENTION

The charcoal used in the metallurgical industry has been manufactured in recent decades mostly from fossil carbon. Nowadays environmental protection is to be taken into account more emphatically in metallurgical processes and in the selection of materials used in said processes. Therefore biomass-based charcoal and particularly wood charcoal will make a viable alternative to fossil carbon in the future and, in addition, it also functions as part of carbon dioxide emissions trading.

Charcoal has been manufactured in batch fashion for thousands of years. Batch carbonization has been carried out for example in different kinds of pits, retorts or waggon retorts. Continuous carbonization is carried out for instance in a horizontal or vertical retort, drum kiln or fluidized bed reactor.

Most typically charcoal is made from biomass or vegetal materials. These include various nutshells, waste generated in wood processing such as sawing waste, sawdust or bark. In addition, the trunks of the eucalyptus tree for example are used for making charcoal after the branches and leaves have been removed for the fabrication of eucalyptus oil.

The continuous carbonization processes that occur in a vertical shaft kiln (a retort) are represented by the Lambiotte and Lurgi processes. The wood material is fed into the furnace from the top of the furnace and travels through the drying, carbonizing and cooling steps in the furnace. The gases are conveyed upwards from below. The steps may be separated from each other by a gas-lock.

The continuous coking of peat and wood in a drum kiln is described for example in CA application publication 1 054 088 (FI56549). The method is described in more detail as applied to the processing of eucalyptus wood, for example in the Master's thesis: Latva-Somppi, J.: Study of carbonization of eucalyptus, pages 25 - 28, Helsinki University of Technology 1989. First the wood material is chipped and after this it is dried by means of exhaust gases exiting a combustion chamber. The exhaust gases may be conveyed to a feed silo. The dried wood material is screened and fine material can be fed into the same combustion chamber in which the gas exiting coking is burned. When the moisture content of the wood material has fallen to a value below 10%, it can be fed into the coking furnace. The coking furnace functions on the countercurrent principle, i.e. hot gases are fed into the furnace from the opposite end to the wood material. The carbonization temperature is 500-900°C depending on the requirements set for charcoal. The temperature required for carbonization is achieved by burning part of the gases formed in carbonization, and additional heat is obtained with an auxiliary burner. The gases, tar and fly ash formed in carbonization are burned in the combustion chamber as is the waste wood generated in wood chipping. After combustion, the hot combustion gases are conveyed to a boiler, and water is fed into the piping thereof to produce pressurized steam and then electricity and district heat. The charcoal that is produced is cooled for example with water, after which the charcoal is classified. Fine carbon material can be briquetted or burned in the combustion chamber.

A continuous carbonization process has been developed for carbonizing sawdust and other wood waste in a fluidized bed furnace. These methods are disclosed for example in US patent publications 3,977,947, 4,510,021 and 6,808,390. The use of an inert bed, such as a bed of sand, is usual, but in the first-mentioned US publication, the use of previously carbonized material as the bed material is mentioned. In most cases, wood is fed into the bed material, although it can also be fed from the upper section of the furnace. In each method described carbonization is carried out at a maximum temperature of 650°C.

The publications revealed mostly deal with the production of charcoal from biomass as economically as possible, but they do not consider the strict quality criteria for charcoal required in the fabrication of ferroalloys, for instance.

### OBJECT OF THE INVENTION

The object of the present invention is to disclose a method for the continuous production of charcoal, which meets the quality criteria set by the metallurgical industry and in particular required for the fabrication of ferroalloys.

### SUMMARY OF THE INVENTION

According to one aspect the invention relates to a method for the continuous production of charcoal to be used in the metallurgical industry, whereby wood material, which is debarked heartwood with the mechanical impurities removed, that is to be processed in order to produce charcoal with low ash, sulphur and phosphorus content, sufficient strength and low volatiles content, is conveyed to partitioning treatment in order to reduce the wood material in size to a particle-like form, the wood material in particle-like form is dried and conveyed to high-temperature carbonization.

The invention relates to a method according to claim 1 for producing environment-friendly particle-like charcoal for use in reduction occurring during the production of ferroalloys, whereby charcoal having low ash, sulphur and phosphorus content, sufficient strength, and low volatiles content, is produced continuously from wood material.

According to one embodiment of the invention, frozen wood material is de-iced before debarking. Frozen wood material is de-iced preferably by means of the hot gases formed in drying. According to one preferred embodiment, the gases generated in de-icing are conveyed to gas scrubbing, and the waters generated in de-icing are conveyed to the wastewater purification step before being discharged from the cycle.

### LIST OF DRAWINGS

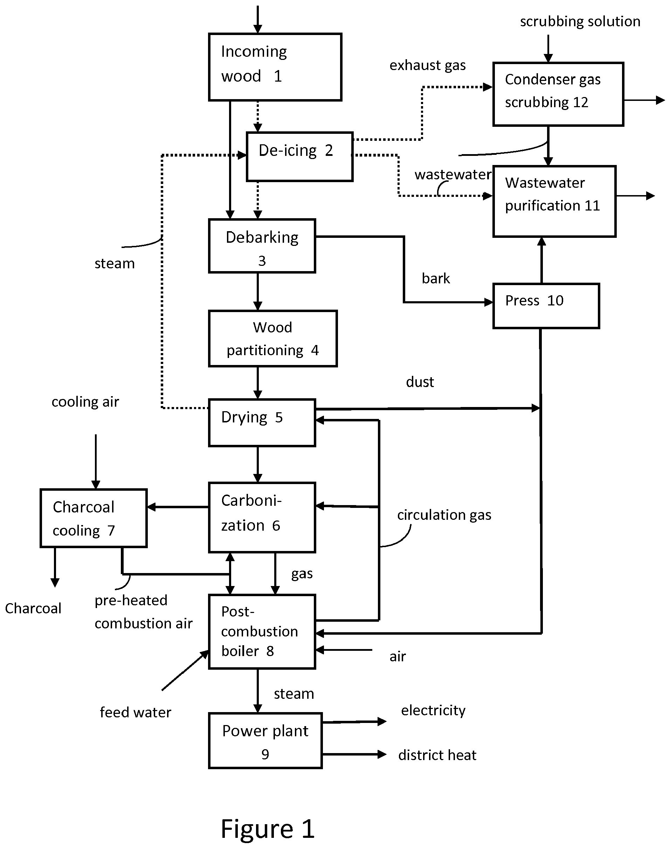

Figure 1 presents a flow chart of the charcoal production method in accordance with an embodiment of the invention.

### DETAILED DESCRIPTION

When the object is to produce charcoal continuously for use in the metallurgical industry, such as in the reduction stage of ferroalloy production, the charcoal must fulfil certain criteria. The C_{fix} content of the charcoal must be as high as possible, over 75 %, the amount of volatiles below 1 %, the amount of alkalis below 0.2 %, the sulphur content below 0.07 % and the phosphorus content below 0.03%. C_{fix} means fixed carbon, which is not removed along with the volatiles into the tar substances or gases, but becomes a carbonization residue, from which the ash portion has been removed. All the percentages mentioned in the text indicate percentages by weight. Charcoal should also be sufficiently strong when hot, so that it does not disintegrate into dust when fed into a furnace. The electroconductivity of the charcoal should be sufficiently low. The lump size of metallurgical coke should be in the region of 10-25 mm. Coarser coke cannot be used for example in the reduction of ferrochrome, because its electroconductivity is too high. For its part, finer coke causes compression of the bed in the ferrochrome furnace and as a result uneven gas distribution. The fabrication of the kind of coke that has a high C_{fix} content and a low amount of volatiles requires a high carbonization temperature, i.e. it should be at least 700°C.

Studies have shown that for example the ash content of wood bark may be up to ten times the ash content of actual wood. In carbonization ash mostly turns into carbon. If the aim is to minimize the amount of impurities in charcoal, debarked wood should be used as the raw material for carbonization. Another precondition for the formation of high-quality charcoal is that no foreign matter should be present in carbonization. Therefore the mechanical impurity that comes with sawdust and other wood waste for instance, like the bed of sand in the fluidized bed furnace mentioned in the prior art, causes an increase in harmful substances in the finished charcoal product. Therefore it is clear that only wood material from which the bark and other impurities have been removed is to be used in the method in accordance with the invention.

Heartwood means debarked wood.

Carbonization or pyrolysis or coking means the physical and chemical decomposition of an organic solid substance in an oxygen-free space under the effect of heat. It is the step preceding actual combustion or gasification, in which the volatile substances contained in the fuel are removed as a result of thermal decomposition forming water vapour, gas and tar components. A porous carbonized residue or coke is left behind. Carbon generated from wood is called charcoal.

The wood carbonization process can be divided into various stages. The first stage is drying or the evaporation of water, which occurs at temperatures of 100-200°C. The decomposition of the wood is still minor at this stage. The decomposition of wood material starts in the second stage, when mainly the oxygen-containing gases in the wood material are released. This occurs at a higher temperature, i.e. around 200-280°C, when carbon dioxide and carbon monoxide, water and water-soluble substances such as acetic acid are released from the wood material. The third stage, which occurs at temperatures of 280-500°C, could be called a hydrocarbon stage, and at this point the exothermic decomposition of the wood material or reaction proceeds by itself and produces heat. As a result of the decomposition reactions, further acetic acid, methanol and tar are removed from the wood material. The amount of gas generated is large compared to the earlier stages. The actual carbonization of the wood material can be regarded as occurring at a temperature of around and above 500°C.

In practice, the carbonization process may be implemented as a continuous process at least in a retort, drum furnace and fluidized bed furnace.

The batch-type production of charcoal requires the cooling and discharging of the kiln between every batch. Therefore continuous charcoal production eliminates expensive stages, energy economy is improved and the carbonization process is enhanced.

The fabrication of charcoal used for reduction of ferroalloys requires more stages than conventional charcoal production, which raises production costs. For this reason all secondary material generated during charcoal production should be exploited as well as possible, so that the overall process costs remain competitive. The advantage of charcoal is that it is produced from renewable natural material, it maximizes quality and minimizes the use of energy, various emissions to air and water as well as the amount of waste produced.

An embodiment of the method in accordance with the invention is illustrated by the flow chart according to the attached Figure 1. The wood material to be processed, such as saw timber, is conveyed to receiving area 1. In some cases the wood material may be frozen, so it is conveyed first to de-icing treatment 2, which may be carried out using hot gas obtained from a later drying step 5. If de-icing treatment is not needed, the wood material is conveyed directly to debarking step 3. Debarking takes place in a debarking drum for example. Wood bark contains 1.5-3.5% ash, whereas for instance Finnish softwood contains 0.2-0.4%. Eucalyptus wood contains somewhat more ash than Finnish wood. For its part, ash contains calcium, silicon, magnesium, potassium, sodium, iron, phosphorus and sulphur among others, and the majority of the ash components end up in the charcoal. In addition, mechanical impurities such as sand may have adhered to the wood bark. For the reasons above, it is preferable to remove bark from the wood material before it is carbonized in order to make high-quality charcoal. However, it is clear that if ready barked, mechanically clean heartwood is available then separate debarking and cleaning treatment is unnecessary.

Minimizing the amount of ash and removing impurities, such as de-icing any ice and debarking the wood, have another effect too. A minor amount of ash enables the carbonization temperature to be raised without the melting ash components causing crust formation, clogging and build-ups.

After debarking, the debarked wood material is reduced in size to particle-like form in partitioning treatment 4, in which it is given a uniform particle-like form. The preferred screen size, through which the particle-like material is passed, is 10-40 mm. The particle-like wood material, which has a moisture content of around 40-60%, is conveyed for example via a buffer silo to drying step 5. Drying takes place at a temperature of 100-200°C and after drying the moisture content of the wood material is in the order of 10-20%. The drying step may be carried out in a separate reactor such as a fluidized bed reactor, in which there is a bed formed of the wood material to be processed. Likewise, in drum furnace carbonization, drying can be performed in a separate drum furnace, from which the dried wood material is fed into the carbonization drum furnace. Of course it is also clear that drying can be performed in a reactor of some other type than carbonization. According to another alternative, the drying step is performed for instance as a pre-treatment step in connection with a shaft furnace. The energy required for drying is obtained from the circulation gases of a post-combustion boiler 8. Drying of the wood material is a precondition for effective and complete carbonization. If necessary, the dried material is screened so that only material with the desired particle size is conveyed to carbonization.

The debarked and dried wood material having a suitable particle size is conveyed to carbonization 6, which typically takes place at a temperature of 750-1000°C. The carbonization step can be carried out in a continuously operating reactor as described above, such as a fluidized bed furnace, drum furnace or shaft furnace. When carbonization is carried out in a fluidized bed reactor it is essential that the bed material is previously formed charcoal, so as to prevent impurities from contaminating the charcoal that is generated. Additional heating equipment is also arranged in the reactor (not shown in detail in the diagram), which is used for heating and, if necessary, for adjusting the temperature. Preheated combustion air is fed into the carbonization step and combustion takes place with an air deficit, i.e. the amount of air infeed is below the stoichiometric amount required for combustion. Therefore only the first part of the gases formed in carbonization are burned in the carbonization reactor. The majority of the energy required for carbonization is obtained from burning the gases and dusts formed in carbonization in the carbonization reactor. Additional energy is obtained by means of supplementary heating equipment and by recycling the circulation gas of the post-combustion boiler 8 to the carbonization reactor in order to maintain an adequate temperature. The temperature of the circulation gas conveyed to carbonization is 200-300°C. The properties of charcoal formed in carbonization are affected substantially by the final carbonization temperature and the rate of carbonization. When the carbonization temperature is high, as in the method of the invention, the product strength is improved and the volatiles content is decreased. When the temperature is around 800-1000°C, a product is obtained in which the amount of volatiles is only about 2%. The use of a high carbonization temperature is made possible when the ash content and amount of impurities are minimized in the wood de-icing and debarking treatment prior to carbonization.

The flue gases generated in the carbonization reactor contain, in addition to reducing components, carbon dioxide and water vapour, which may react with carbon at high temperatures, decreasing the charcoal yield. However, the proportion of loss reactions remains low because the wood material develops a lot of gas in carbonization, which prevents the wood material from coming into contact with the flue gases. The temperature of a carbonization reactor equipped with direct heating can be adjusted by means of additional air or additional heating equipment.

The hot charcoal that is formed is cooled in a cooling reactor 7 by means of a cooling medium. In indirect cooling the cooling medium may be water or air and in direct cooling an inert gas. The cooled charcoal is screened and stored. In indirect cooling, the air that is heated in the cooling can be used as the preheated air of the carbonization step. If water cooling is performed, the generated steam is conveyed to the piping of a post-combustion boiler 8. The cooled charcoal is screened and thus divided into the desired fractions. If so desired, the finest material can be briquetted using starch as binder.

The flue gases that contain the second part of the gaseous, liquid and solid components formed in the carbonization reactor 6, are conveyed to the post-combustion boiler 8 and burned there. The combustion temperature in the boiler is adjusted to be such that the ash components do not melt. It is preferable to burn in the post-combustion boiler also the bark material produced in wood material debarking 3, from which the water was pressed out in stage 10. Likewise, it is advantageous to burn the dust generated in drying step 5 in the post-combustion boiler. The energy produced is transferred via the walls and other heat transfer surfaces of the boiler, generating steam from the water fed into the heat transfer piping. The steam generated is conveyed to power plant 9, where it is used to produce electricity and district heat. The cooled circulation gas removed from the boiler, which has a temperature of around 200-300°C, is conveyed to carbonization and drying.

To minimize all the emissions generated in charcoal production, the aqueous solution produced by a bark press 10 is fed to wastewater purification step 11. The wastewater generated in any de-icing 2 of the wood material is also conveyed to this purification step. The exhaust gases formed in the de-icing step are conveyed to condenser gas scrubbing 12, where they are scrubbed with a suitable scrubbing solution. After gas scrubbing the gases can be removed from the cycle and the wastewater that is generated is conveyed to purification step 11, after which the water cleaned of impurities can also be removed from the cycle.

### EXAMPLES

### Example 1

36.5 t/h of debarked and chipped wood material is conveyed to the drying plant. The moisture content of the wood is 40%. After the drying step the moisture content of the wood material is 12% and its composition is:

| | |
|---|---|
| C | 50% |
| H | 6.5% |
| O | 41.5% |
| N | 1.4% |
| S | 0.05% |
| Ash | 0.55% |

The amount of dried wood material conveyed to carbonization is 25 t/h. 4.5 t/h of charcoal is generated in carbonization. The temperature of the gas exiting the carbonization stage is around 900°C and it is 35000 Nm³/h in quantity. There is about 32 vol % of hydrogen and about 27 vol % of carbon monoxide in the gas. The gas of carbonization step is conveyed to the post-combustion boiler where it is burned and the resulting thermal energy is transferred to the water and steam circulating in the boiler pipes, which are conveyed on to the production of electricity and district heat. The gas burned in the boiler produces 71 MWh/h of energy. The temperature of the gas removed from the boiler for circulation is around 300°C.

### Example 2

The table presents an example comparison of the effect of temperature on charcoal quality.

| **Carbonization temperature °C** | **C_{fix} %** | **Volatiles %** |
|---|---|---|
| 978 | 93 | 2 |
| 715 | 85 | 11 |

## Claims

1. A method for the environment-friendly continuous production of particle-like charcoal to be used in reduction occurring in connection with production of ferroalloys, whereby charcoal having sufficient strength, low ash, sulphur and phosphorus content and low volatiles content is produced from wood raw material, the method comprising the following steps:
a) bark and mechanical impurities are removed (3) from the wood material,
b) the wood material is reduced in size (4) to particle-like form,
c) the wood material is dried (5),
d) the dried wood material is carbonized at a temperature of 750-1000 °C in a carbonization reactor (6), whereby a first part of the gases formed in the carbonization of the wood material and dust are burned in the carbonization reactor with an air deficit,
e) a second part of the gases formed in wood material carbonization, wood bark and the dust formed in size reduction (4) are conveyed to a post-combustion boiler (8), where they are burned and the resultant thermal energy is utilized to produce electricity and district heat and a circulation gas is conveyed to drying (5) and carbonization (6) of the particle-like wood material,
f) the particle-like charcoal formed in carbonization is conveyed to cooling (7) and the cooling medium used is conveyed either to the carbonization reactor or the post-combustion boiler,
g) water is removed from the bark material produced during debarking (3) of the wood material by a press (10) and the water is conveyed to a wastewater purification step (11) before being discharged from the cycle.

2. The method according to claim 1, in which the wood material is frozen and the frozen wood material is de-iced (2) before being debarked (3) by means of hot gases.

3. The method according to claim 2, in which the wood material is frozen and the frozen wood material is de-iced (2) by means of the hot gases generated in drying (5).

4. The method according to claim 2 or 3, in which gases generated in de-icing (2) are conveyed to gas scrubbing (12), and the waters generated in de-icing and in gas scrubbing are conveyed to the wastewater purification step (11) before being discharged from the cycle.

## Patentansprüche

1. Verfahren zur umweltfreundlichen kontinuierlichen Herstellung von teilchenartiger Holzkohle zur Verwendung bei der Reduktion, die in Verbindung mit der Herstellung von Ferrolegierungen auftritt, wobei Holzkohle, die ausreichend Festigkeit, geringen Asche-, Schwefel- und Phosphor-Gehalt und geringen Gehalt an flüchtigen Stoffen aufweist, aus Holzrohstoff hergestellt wird, wobei das Verfahren die nachstehenden Schritte umfasst:
a) Rinde und mechanische Verunreinigungen werden von dem Holzmaterial entfernt (3),
b) das Holzmaterial wird in der Größe zu teilchenartiger Form vermindert (4),
c) das Holzmaterial wird getrocknet (5),
d) das getrocknete Holzmaterial wird bei einer Temperatur von 750-1000°C in einem Verkohlungsreaktor verkohlt (6), wobei ein erster Teil der bei der Verkohlung des Holzmaterials gebildeten Gase und Staub in dem Verkohlungsreaktor bei einem Luftmangel verbrannt wird,
e) ein zweiter Teil der bei der Verkohlung des Holzmaterials gebildeten Gase, Holzrinde und der bei der Größenverminderung (4) gebildete Staub werden zu einem Nachverbrennungskessel (8) transportiert, wo sie verbrannt werden und die erhaltene Wärmeenergie genutzt wird, um Elektrizität und Fernwärme zu erzeugen und ein Kreislaufgas wird zum Trocknen (5) und zur Verkohlung (6) des teilchenartigen Holzmaterials transportiert,
f) die bei der Verkohlung gebildete teilchenartige Holzkohle wird zur Kühlung (7) transportiert und das verwendete Kühlmedium wird entweder zu dem Verkohlungsreaktor oder dem Nachverbrennungskessel transportiert,
g) Wasser wird von dem während des Entrindens (3) des Holzmaterials durch eine Presse (10) hergestellten Rindenmaterial entfernt und das Wasser wird vor dem Abführen aus dem Zyklus zu einem Abwasserreinigungsschritt (11) transportiert.

2. Verfahren nach Anspruch 1, wobei das Holzmaterial gefroren ist und das gefrorene Holzmaterial enteist wird (2), bevor es mit Hilfe von heißen Gasen entrindet wird (3).

3. Verfahren nach Anspruch 2, wobei das Holzmaterial gefroren ist und das gefrorene Holzmaterial mit Hilfe der beim Trocknen (5) erzeugten heißen Gase enteist wird (2).

4. Verfahren nach Anspruch 2 oder 3, wobei beim Enteisen (2) erzeugte Gase zur Gasreinigung (12) transportiert werden und die beim Enteisen und Gasreinigen erzeugten Wässer vor dem Abführen aus dem Zyklus zu dem Abwasserreinigungsschritt (11) transportiert werden.

## Revendications

1. Procédé de production continue respectueuse de l'environnement de charbon de bois de forme particulaire à utiliser en réduction se produisant en liaison avec la production de ferroalliages, dans lequel du charbon de bois ayant une résistance suffisante, une faible teneur en cendre, en soufre et en phosphore ainsi qu'une faible teneur en substances volatiles est produit à partir de matériau à base de bois brut, le procédé comprenant les étapes suivantes :
a) l'écorce et les impuretés mécaniques sont éliminées (3) du matériau à base de bois,
b) le matériau à base de bois est réduit en taille (4) sous forme particulaire,
c) le matériau à base de bois est séché (5),
d) le matériau à base de bois séché est carbonisé à une température de 750 à 1000 °C dans un réacteur de carbonisation (6), dans lequel une première partie des gaz formés dans la carbonisation du matériau à base de bois et la poussière sont brûlées dans le réacteur de carbonisation avec un déficit d'air,
e) une seconde partie des gaz formés dans la carbonisation du matériau à base de bois, l'écorce de bois et la poussière formée en réduction de taille (4) sont acheminées à une chaudière de postcombustion (8), où elles sont brûlées et l'énergie thermique résultante est utilisée pour produire de l'électricité et de la chaleur urbaine et un gaz de circulation est acheminé au séchage (5) et à la carbonisation (6) du matériau à base de bois de forme particulaire,
f) le charbon de bois de forme particulaire formé dans la carbonisation est acheminé au refroidissement (7) et l'agent de refroidissement utilisé est acheminé au réacteur de carbonisation ou à la chaudière de postcombustion,
g) de l'eau est retirée du matériau à base d'écorce produit au cours de l'écorçage (3) du matériau à base de bois par une presse (10) et l'eau est acheminée à une étape de purification d'eaux usées (11) avant d'être déchargée du cycle.

2. Procédé selon la revendication 1, dans lequel le matériau à base de bois est congelé et le matériau à base de bois congelé est déglacé (2) avant d'être écorcé (3) au moyen de gaz chauds.

3. Procédé selon la revendication 2, dans lequel le matériau à base de bois est congelé et le matériau à base de bois congelé est déglacé (2) au moyen des gaz chauds générés au séchage (5).

4. Procédé selon la revendication 2 ou 3, dans lequel les gaz générés dans le déglaçage (2) sont acheminés à l'absorption de gaz (12) et les eaux générées dans le déglaçage et dans l'absorption de gaz sont acheminées à l'étape de purification des eaux usées (11) avant d'être déchargées du cycle.
